# EUROPÄISCHE PATENTSCHRIFT

(11) **EP 1 336 448 B1**
(45) Veröffentlichungstag und Bekanntmachung des Hinweises auf die Patenterteilung: **09.03.2005**
(21) Anmeldenummer: 03011278.3
(22) Anmeldetag: 18.08.2001
(51) Int. Cl.: B23K 26/06, B23K 26/10, B23K 37/02, B23Q 5/38, B23Q 1/01, B23Q 1/60

(54) **Werkzeugmaschine zum Bearbeiten von Werkstücken mittels eines Laserstrahls, mit wenigstens einer gemeinsamen Antriebsstange**
Machine tool for machining workpieces by laser, with at least one common shared rack
Machine outil pour l'usinage de pièces par faisceau laser, avec au moins une crémaillère commune

(43) Veröffentlichungstag der Anmeldung: 20.08.2003
(62) Teilanmeldung aus: 01119997.3
(73) Patentinhaber: TRUMPF Werkzeugmaschinen GmbH + Co. KG, 71254 Ditzingen (DE)
(72) Erfinder: Erlenmaier, Werner, 70839 Gerlingen (DE); Keel, Urs, 07310 Bad Ragaz (CH)
(74) Vertreter: Kohler Schmid Möbus

(56) Entgegenhaltungen:
- DE-A- 4 411 263
- US-A- 4 342 535
- US-A- 5 560 843
- US-A- 5 774 981
- PATENT ABSTRACTS OF JAPAN vol. 018, no. 054 (M-1549), 27. Januar 1994 (1994-01-27) & JP 05 277779 A (KITAGAWA IRON WORKS CO LTD), 26. Oktober 1993 (1993-10-26)
- PATENT ABSTRACTS OF JAPAN vol. 010, no. 047 (M-456), 25. Februar 1986 (1986-02-25) & JP 60 199586 A (MITSUBISHI ELECTRIC CORP), 9. Oktober 1985 (1985-10-09)

## Beschreibung

Die Erfindung betrifft eine Werkzeugmaschine zum Bearbeiten von Werkstücken mittels eines Laserstrahls gemäß dem Oberbegriff des Anspruchs 1.

Derartige Maschinen sind bekannt aus EP-A-0 559 916 sowie aus JP-A-60199586. An beiden vorbekannten Maschinen ist der Laserbearbeitungskopf an einer einen Werkstücktisch übergreifenden Brücke angebracht und dort in Brückenlängsrichtung verfahrbar. Die Brücke ihrerseits kann quer zu ihrer Längsrichtung bewegt werden. Die sich so ergebenden Bewegungsachsen des Laserbearbeitungskopfes definieren eine horizontale Ebene, innerhalb derer der Arbeitsbereich des Laserbearbeitungskopfes liegt. Die Strahlposaunen beider Maschinen sorgen dafür, dass die Laserstrahllänge, also die Länge des Ausbreitungsweges des Laserstrahls von der Laserstrahlquelle bis zu dem Laserbearbeitungskopf, ungeachtet der Relativbewegung von Laserbearbeitungskopf und Laserstrahlquelle konstant bleibt. Infolgedessen ergeben sich über den gesamten Arbeitsbereich des jeweiligen Laserbearbeitungskopfes einheitliche Bearbeitungseigenschaften des Laserstrahls. Als Strahlumlenkungen umfassen die vorbekannten Strahlposaunen Anordnungen mit jeweils zwei Umlenkspiegeln, mittels derer der Laserstrahl im Bereich der Strahlposaune auf einem im Wesentlichen U-förmigen Weg geführt wird.

Die Strahlumlenkung der Maschine nach EP-A-0 559 916 ist dem Arbeitsbereich des Laserbearbeitungskopfes in Querrichtung der den Laserbearbeitungskopf führenden Brücke benachbart angeordnet und in Brückenlängsrichtung verfahrbar. Die Laserstrahlquelle ist in Brückenlängsrichtung gegen den Arbeitsbereich des Laserbearbeitungskopfes versetzt.

Im Falle der Maschine gemäß JP-A-60199586 sind zwei Strahlposaunen mit jeweils einer eigenen Strahlumlenkung vorgesehen.
Die eine dieser Strahlumlenkungen ist gemeinsam mit dem Laserbearbeitungskopf an der Brücke der Maschine in Brückenlängsrichtung geführt. Die zweite Strahlumlenkung ist mit der Brücke in deren Querrichtung verfahrbar.

Eine kompakt bauende Maschine zu schaffen, hat sich die vorliegende Erfindung ausgehend von dem gattungsgemäßen Stand der Technik zum Ziel gesetzt.

Erfindungsgemäß gelöst wird diese Aufgabe durch die Merkmalskombination gemäß Patentanspruch 1. Eine kompakte Maschinenbauart bedingen die kennzeichnenden Merkmale von Patentanspruch 1 insofern, als ein und dieselbe Antriebsstange sowohl zum Antrieb der Strahlumlenkung der Strahlposaune als auch zum Antrieb des Laserbearbeitungskopfes genutzt wird.

Besondere Ausführungsarten der Werkzeugmaschine nach Patentanspruch 1 ergeben sich aus den angegebenen abhängigen Patentansprüchen.

Patentanspruch 2 beschreibt eine funktionssichere und fertigungs- sowie montagetechnisch einfach umzusetzende Möglichkeit zur gemeinsamen Nutzung einer Antriebsstange durch die Antriebe der Strahlumlenkung der Strahlposaune und des Laserbearbeitungskopfes.

Gemäß Patentanspruch 3 ist zur Erzielung eines kompakten Gesamtaufbaus neben wenigstens einer gemeinsamen Antriebsstange auch wenigstens eine gemeinsame Führungsschiene für die Strahlumlenkung der Strahlposaune und den Laserbearbeitungskopf vorgesehen.

Patentanspruch 4 schließlich betrifft den Fall, dass der Laserbearbeitungskopf an einer zweiten Führungsstruktur und diese gemeinsam mit der Strahlumlenkung der Strahlposaune an einer ersten Führungsstruktur bewegbar ist. In bevorzugter Ausgestaltung der Erfindung sind dabei für die Strahlumlenkung der Strahlposaune und die zweite Führungsstruktur Antriebe vorgesehen, die wenigstens eine Antriebsstange gemeinsam nutzen.

Nachstehend wird die Erfindung anhand schematischer Darstellungen zu einem Ausführungsbeispiel näher erläutert. Es zeigen:
- Fig. 1: eine Laserbearbeitungsmaschine einschließlich Laserstrahlquelle, Strahlposaune mit Strahlumlenkung und Brücke mit Laserbearbeitungskopf in stark schematisierter Darstellung,
- Fig. 2: die Laserbearbeitungsmaschine nach Fig. 1 (weniger stark schematisiert) in der Ansicht in Richtung des Pfeils II in Fig. 1,
- Fig. 3: Antriebs- und Führungseinrichtungen für die Strahlumlenkung der Strahlposaune und für die Brücke nach den Fign. 1 und 2,
- Fig. 4: die für die Strahlumlenkung der Strahlposaune vorgesehenen Antriebs- und Führungseinrichtungen nach Fig. 3 in vergrößerter Darstellung und
- Fig. 5: die für die Brücke vorgesehenen Antriebs- und Führungseinrichtungen nach Fig. 3 in vergrößerter Darstellung.

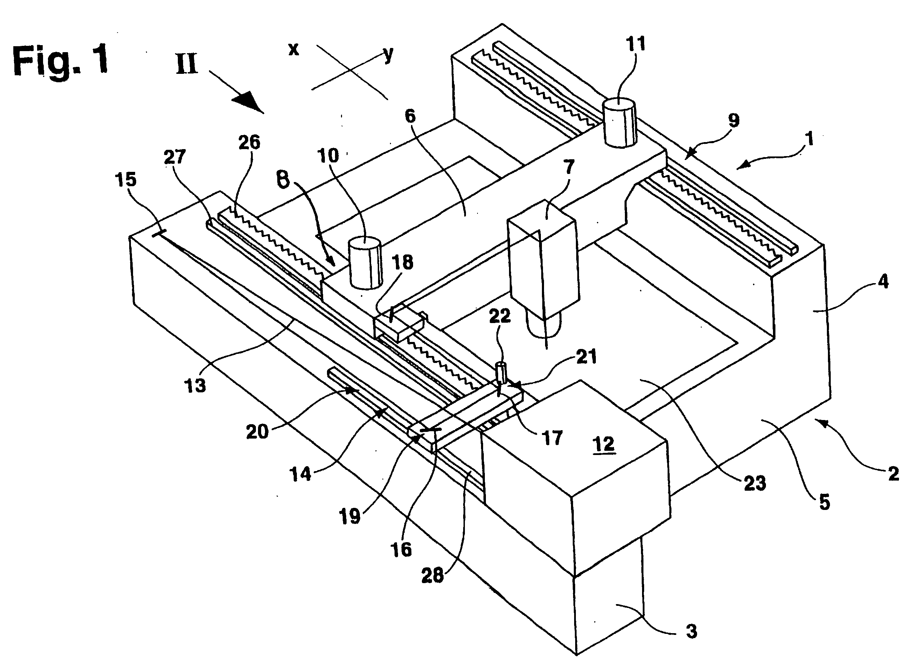

Gemäß Fig. 1 besitzt eine Laserbearbeitungsmaschine, vorliegend eine Laserschneidmaschine 1, einen Maschinenrahmen 2, an welchem Maschinenlängsträger 3, 4 und zwischen diesen eine Werkstückauflage 5 ausgebildet sind. Auf den Maschinenlängsträgern 3, 4 ist eine Brücke 6 in Richtung einer ersten Bewegungsachse (x-Achse) bewegbar. Die Brücke 6 ihrerseits lagert und führt einen Laserbearbeitungskopf in Form eines Laserschneidkopfes 7 in Richtung einer zweiten Bewegungsachse (y-Achse). Dementsprechend bilden die Maschinenlängsträger 3, 4 eine erste Führungsstruktur, die Brücke 6 eine zweite Führungsstruktur.

Nachstehend noch im Einzelnen beschriebene Antriebe 8, 9 mit elektrischen Antriebsmotoren 10, 11 bewirken die Bewegung der Brücke 6 mit dem daran gehaltenen Laserschneidkopf 7 in Richtung der x-Achse; ein der Einfachheit halber nicht gezeigter elektrischer Antrieb herkömmlicher Bauart sorgt für den Antrieb des Laserschneidkopfes 7 in Richtung der y-Achse.

Eine Laserstrahlquelle in Form eines CO₂-Lasers 12 ruht auf einem der beiden Enden des Maschinenlängsträgers 3. Der CO₂-Laser 12 dient zur Erzeugung eines Laserstrahls 13, der mittels einer Strahlführung 14 ausgehend von dem CO₂-Laser 12 zu dem Laserschneidkopf 7 gelenkt wird. Zu diesem Zweck umfasst die Strahlführung 14 u.a. Umlenkspiegel 15, 16, 17, 18, wobei die Umlenkspiegel 16, 17 Bestandteile einer Strahlumlenkung 19 einer Strahlposaune 20 sind.

Die Strahlumlenkung 19 der Strahlposaune 20 ist an dem Maschinenlängsträger 3 in Richtung der x-Achse geführt und wird mittels eines Antriebes 21 über einen Antriebsmotor 22 bewegt.

Auch der Antrieb 21 der Strahlumlenkung 19 wird nachstehend noch im Einzelnen erläutert.

In gewohnter Weise dient die Strahlposaune 20 dazu, die Länge des Laserstrahls 13, d.h. die Länge des Ausbreitungsweges des Laserstrahls 13 von dem CO₂-Laser 12 bis zu dem Laserschneidkopf 7, im Einzelnen der dort vorgesehenen Fokussierlinse, konstant zu halten. Zu diesem Zweck wird die Strahlumlenkung 19 abgestimmt auf diejenige Bewegung verfahren, welche der Laserschneidkopf 7 bei der Werkstückbearbeitung, beispielsweise beim Schneiden eines auf der Werkstückauflage 5 ruhenden Blechs 23, ausführt. Bewegt sich der Laserschneidkopf 7 etwa in Fig. 1 um einen bestimmten Betrag in Richtung der y-Achse zu dem Maschinenlängsträger 4 hin, so verfährt die Strahlumlenkung 19 zeitgleich an dem Maschinenlängsträger 3 entlang in Richtung auf die Brücke 6. Nachdem der Laserstrahl 13 mittels der Strahlumlenkung 19 U-förmig "gefaltet" wird, hat die Verfahrweglänge der Strahlumlenkung 19 zur Kompensation der von dem Laserschneidkopf 7 ausgeführten Bewegung lediglich die Hälfte der Länge des Verfahrweges des Laserschneidkopfes 7 zu betragen. Entsprechend werden durch Verfahren der Strahlumlenkung 19 in Richtung der x-Achse auch Bewegungen des Laserschneidkopfes 7 kompensiert, die von Letzerem durch Verfahren der Brücke 6 in Richtung der x-Achse ausgeführt werden. Durch die Kompensation der Bewegungen des Laserschneidkopfes 7 mittels der Strahlposaune 20 und der damit verbundenen Konstanz der Länge des Laserstrahls 13 wird erreicht, dass dieser über den gesamten Arbeitsbereich des Laserschneidkopfes 7 einheitliche Bearbeitungseigenschaften besitzt.

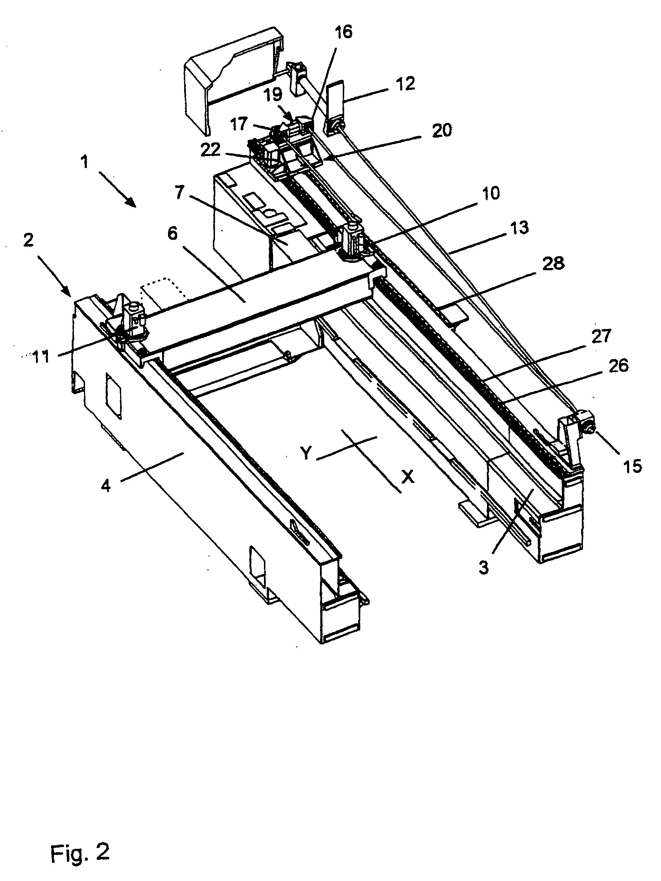

Wie insbesondere aus Fig. 2 hervorgeht, ist der CO₂-Laser 2 gegenüber der Strahlumlenkung 19 der Strahlposaune 20 erhöht angeordnet. Demzufolge kann die Strahlumlenkung 19 den CO₂-Laser 12 bei ihrer Bewegung zur Kompensation der Verfahrbewegung des Laserschneidkopfes 7 unterfahren. Der Umlenkspiegel 15 der Strahlführung 14 dient als Strahlführungselement zur Umlenkung des von dem CO₂-Laser 12 ausgesandten Laserstrahls 13 zu der Strahlumlenkung 19.

In Fig. 2 ist die Strahlumlenkung 19 in einer ihrer Bewegungs-Endstellungen in Richtung der x-Achse gezeigt. Auch die Brücke 6 nimmt dabei in Richtung der x-Achse eine ihrer Bewegungs-Endstellungen ein. In Richtung der y-Achse ist der Laserschneidkopf 7 in seine zu dem Maschinenlängsträger 3 hin gelegene Endstellung verfahren. In seiner Endstellung an dem gegenüberliegenden Ende der Brücke 6 ist der Laserschneidkopf 7 in Fig. 2 gestrichelt dargestellt. Würde der Laserschneidkopf 7 bei in der gezeigten Bewegungs-Endstellung verbleibender Brücke 6 in Richtung der y-Achse aus der mit ausgezogenen Linien eingezeichneten Endstellung in die mit gestrichelten Linien dargestellte Endstellung verfahren, so müsste sich zur Kompensation dieser Bewegung die Strahlumlenkung 19 aus der Bewegungs-Endstellung gemäß Fig. 2 um die Hälfte der Verfahrweglänge des Laserschneidkopfs 7 in Richtung der x-Achse zu der Brücke 6 hin bewegen. Entsprechend ist in dem Betriebszustand gemäß Fig. 2 in Richtung der x-Achse der Abstand zwischen der Strahlumlenkung 19 und der Brücke 6 gewählt. Dieser Abstand und die Abmessung der Strahlumlenkung 19 in Richtung der x-Achse geben die Länge des Überstandes des Maschinenlängsträgers 3 gegenüber der in der gezeigten Bewegungs-Endstellung befindlichen Brücke 6 vor.

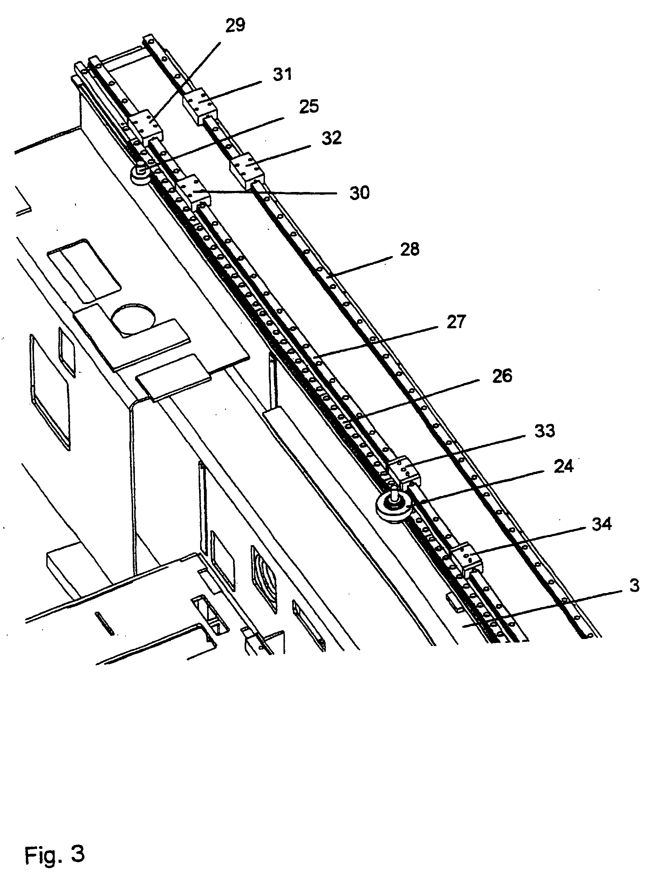

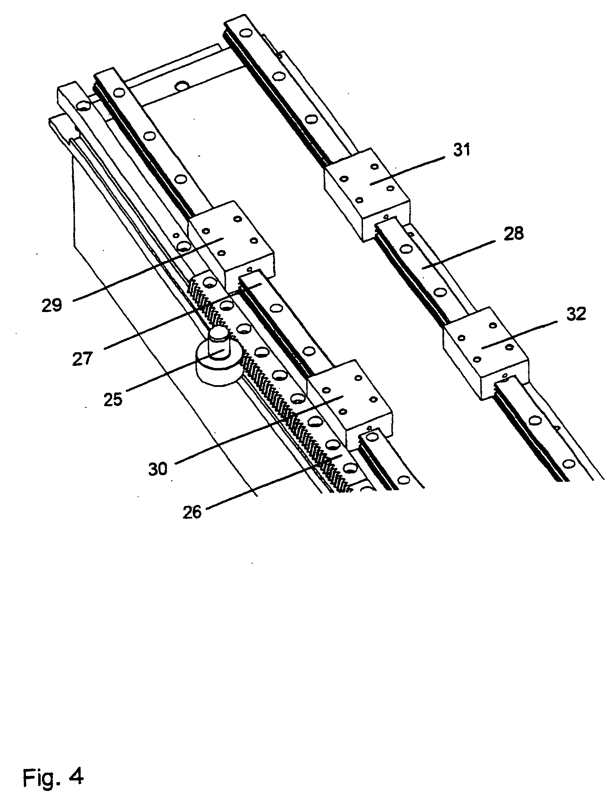

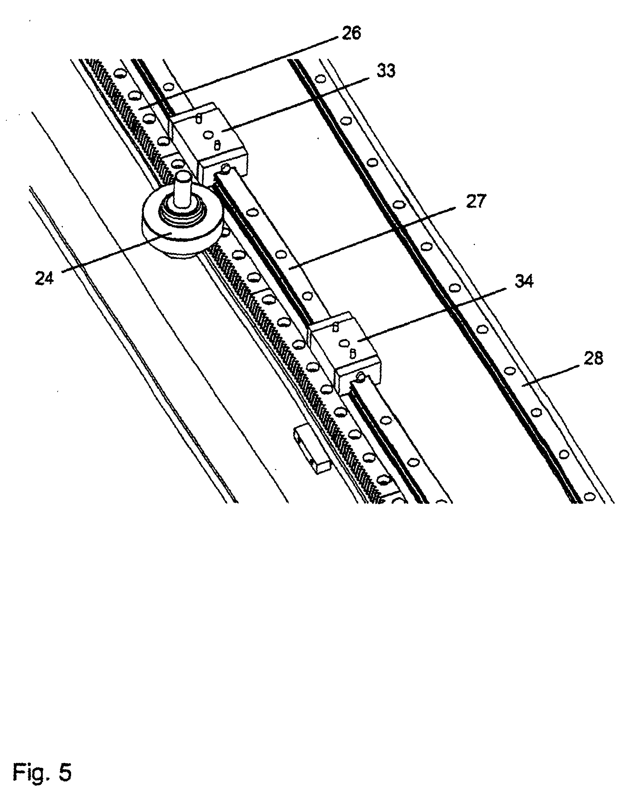

In den Fign. 3 bis 5 zu erkennen sind ein Antriebsritzel 24 des Antriebes 8 für die Brücke 6 sowie ein Antriebsritzel 25 des Antriebes 21 für die Strahlumlenkung 19. Die Antriebsritzel 24, 25 werden über die elektrischen Antriebsmotoren 10, 22 angetrieben und kämmen mit einer gemeinsamen Zahnstange 26, die mit dem Maschinenlängsträger 3 verschraubt ist und dort in Richtung der x-Achse verläuft.

Parallel zu der Zahnstange 26 erstrecken sich an dem Maschinenlängsträger 3 Führungsschienen 27, 28, die gleichfalls mit dem Maschinenlängsträger 3 verschraubt sind. Die Führungsschiene 27 dient dabei als gemeinsame Führungsschiene für die Brücke 6 und die Strahlumlenkung 19, die Führungsschiene 28 zur alleinigen Führung der Strahlumlenkung 19. Die Lagerung der Strahlumlenkung 19 an den Führungsschienen 27, 28 erfolgt über Führungswagen 29, 30, 31, 32, die Führung der Brücke 6 an der Führungsschiene 27 mittels Führungswagen 33, 34. Zur Steuerung des Antriebes 21 für die Strahlumlenkung 19 der Strahlposaune 20 ist ebenso wie zur Steuerung der Antriebe 8, 9 für die Brücke 6 und die Steuerung des Antriebes für den Laserschneidkopf 7 eine nicht gezeigte CNC-Steuerung vorgesehen. Mittels dieser lässt sich der Antrieb 21 der Strahlumlenkung 19 abgestimmt auf die Steuerung der Antriebe 8, 9 der Brücke 6 sowie abgestimmt auf den Antrieb des Laserschneidkopfs 7 steuern.

## Patentansprüche

1. Werkzeugmaschine zum Bearbeiten von Werkstücken mittels eines Laserstrahls (13), umfassend eine Laserstrahlquelle (12), einen Laserbearbeitungskopf (7) sowie eine Strahlführung (14) zur Führung des Laserstrahls (13) von der Laserstrahlquelle (12) zu dem Laserbearbeitungskopf (7), wobei der Laserbearbeitungskopf (7) bei der Werkstückbearbeitung relativ zu der Laserstrahlquelle (12) bewegbar ist und die Strahlführung (14) eine Strahlposaune (20) mit einer Strahlumlenkung (19) aufweist, welche bei der Bewegung des Laserbearbeitungskopfes (7) relativ zu der Laserstrahlquelle (12) auf diese Bewegung abgestimmt bewegbar ist, so dass die Länge des Laserstrahles konstant bleibt, **dadurch gekennzeichnet, dass** die Strahlumlenkung (19) der Strahlposaune (20) und der Laserbearbeitungskopf (7) mittels jeweils wenigstens eines Antriebes (8, 9, 21) mit wenigstens einem mit der Strahlumlenkung (19) der Strahlposaune (20) oder dem Laserbearbeitungskopf (7) bewegungsverbundenen Antriebsrad in Richtung einer gemeinsamen Bewegungsachse (x-Achse) bewegbar sind, wobei wenigstens ein der Strahlumlenkung (19) der Strahlposaune (20) und wenigstens ein dem Laserbearbeitungskopf (7) zugeordnetes Antriebsrad mit wenigstens einer gemeinsamen Antriebsstange (26) zusammenwirken, die in Richtung der gemeinsamen Bewegungsachse (x-Achse) der Strahlumlenkung (19) der Strahlposaune (20) und des Laserbearbeitungskopfes (7) verläuft und mit einem Rahmen (2) der Werkzeugmaschine verbunden ist.

2. Werkzeugmaschine nach Anspruch 1, **dadurch gekennzeichnet, dass** wenigstens eine gemeinsame Antriebsstange als Zahnstange (26) und wenigstens ein der Strahlumlenkung (19) der Strahlposaune (20) sowie wenigstens ein dem Laserbearbeitungskopf (7) zugeordnetes Antriebsrad als mit der Zahnstange (26) kämmendes Antriebsritzel (24, 25) ausgebildet sind.

3. Werkzeugmaschine nach einem der vorhergehenden Ansprüche, **dadurch gekennzeichnet, dass** an dem Rahmen (2) der Werkzeugmaschine zusätzlich zu der wenigstens einen gemeinsamen Antriebsstange zumindest eine gemeinsame Führungsschiene (27) für die Strahlumlenkung (19) der Strahlposaune (20) und den Laserbearbeitungskopf (7) vorgesehen ist, die in Richtung der gemeinsamen Bewegungsachse (x-Achse) der Strahlumlenkung (19) der Strahlposaune (20) und des Laserbearbeitungskopfes (7) verläuft und welche die Strahlumlenkung (19) der Strahlposaune (20) und den Laserbearbeitungskopf (7) in dieser Richtung führt.

4. Werkzeugmaschine nach einem der vorhergehenden Ansprüche, **dadurch gekennzeichnet, dass** die Strahlumlenkung (19) der Strahlposaune (20) und eine zweite, den Laserbearbeitungskopf (7) lagernde und in Richtung einer zweiten Bewegungsachse (y-Achse) führende Führungsstruktur (6) des Rahmens (2) der Werkzeugmaschine in Richtung der gemeinsamen Bewegungsachse (x-Achse) an einer ersten Führungsstruktur (3, 4) bewegbar sind, wobei die zweite Führungsstruktur (6) mittels eines Antriebes (8, 9) mit wenigstens einem mit der zweiten Führungsstruktur (6) bewegungsverbundenen Antriebsrad in Richtung der gemeinsamen Bewegungsachse (x-Achse) bewegbar ist und wobei wenigstens ein der Strahlumlenkung (19) der Strahlposaune (20) und wenigstens ein der zweiten Führungsstruktur (6) zugeordnetes Antriebsrad mit der gemeinsamen Antriebsstange (26) zusammenwirken, die mit der ersten Führungsstruktur (3) verbunden ist.

## Claims

1. Machine tool for machining workpieces by means of a laser beam (13), comprising a laser beam source (12), a laser machining head (7) as well as a beam guide (14) for guiding the laser beam (13) from the laser beam source (12) to the laser machining head (7), wherein the laser machining head (7) can move relative to the laser beam source (12) during workpiece machining, and the beam guide (14) comprises a beam trombone (20) with a beam deflection part (19) which, upon the laser machining head (7) moving relative to the laser beam source (12), can move in synchronism with this movement, so that the length of the laser beam remains constant, **characterised in that** the beam deflection part (19) of the beam trombone (20) and the laser machining head (7) can move by means of in each case at least one drive (8, 9, 21) with at least one drive wheel, connected for movement to the beam deflection part (19) of the beam trombone (20) or the laser machining head (7), in the direction of a common axis of movement (x axis), wherein at least one drive wheel associated with the beam deflection part (19) of the beam trombone (20) and at least one drive wheel associated with the laser machining head (7) co-operate with at least one common drive bar (26), which extends in the direction of the common axis of movement (x axis) of the beam deflection part (19) of the beam trombone (20) and the laser machining head (7) and is connected to a frame (2) of the machine tool.

2. Machine tool according to Claim 1, **characterised in that** at least one common drive bar is formed as a rack (26), and at least one drive wheel associated with the beam deflection part (19) of the beam trombone (20) as well as at least one drive wheel associated with the laser machining head (7) are formed as a drive pinion (24, 25) which meshes with the rack (26).

3. Machine tool according to any one of the preceding Claims, **characterised in that**, in addition to the at least one common drive bar, at least one common drive rail (27) for the beam deflection part (19) of the beam trombone (20) and the laser machining head (7) is provided at the frame (2) of the machine tool, which rail extends in the direction of the common axis of movement (x axis) of the beam deflection part (19) of the beam trombone (20) and the laser machining head (7) and guides the beam deflection part (19) of the beam trombone (20) and the laser machining head (7) in this direction.

4. Machine tool according to any one of the preceding Claims, **characterised in that** the beam deflection part (19) of the beam trombone (20) and a second guide structure (6) of the frame (2) of the machine tool which supports the laser machining head (7) and guides it in the direction of a second axis of movement (y axis) can move in the direction of the common axis of movement (x axis) at a first guide structure (3, 4), wherein the second guide structure (6) can move by means of a drive (8, 9) with at least one drive wheel, connected for movement to the second guide structure (6), in the direction of the common axis of movement (x axis), and wherein at least one drive wheel associated with the beam deflection part (19) of the beam trombone (20) and at least one drive wheel associated with the second guide structure (6) co-operate with the common drive bar (26), which is connected to the first guide structure.

## Revendications

1. Machine-outil pour l'usinage de pièces au moyen d'un faisceau laser (13), comprenant une source de faisceau laser (12), une tête d'usinage laser (7) ainsi qu'un guidage de faisceau (14) pour le guidage du faisceau laser (13) de la source de faisceau laser (12) jusqu'à la tête d'usinage laser (7), la tête d'usinage laser (7) pouvant être déplacée lors de l'usinage de pièces par rapport à la source de faisceau laser (12) et le guidage de faisceau (14) présentant un trombone à faisceau (20) avec une déviation de faisceau (19) laquelle peut être déplacée, lors du déplacement de la tête d'usinage laser(7), par rapport à la source de faisceau laser (12) en étant réglée sur ce déplacement de telle sorte que la longueur du faisceau laser reste constante, **caractérisée en ce que** la déviation de faisceau (19) du trombone à faisceau (20) et la tête d'usinage laser (7) peuvent être déplacées au moyen de respectivement au moins un entraînement (8, 9, 21) avec au moins une roue motrice reliée par mouvement à la déviation de faisceau (19) du trombone à faisceau (20) ou à la tête d'usinage laser (7) en direction d'un axe de déplacement commun (axe x), au moins une roue motrice affectée à la déviation de faisceau (19) du trombone à faisceau (20) et au moins une roue motrice affectée à la tête d'usinage laser (7) agissant ensemble avec au moins une tige d'entraînement commune (26), qui s'étend en direction de l'axe de déplacement commun (axe x) de la déviation de faisceau (19) du trombone à faisceau (20) et de la tête d'usinage laser (7) et est reliée à un châssis (2) de la machine-outil.

2. Machine-outil selon la revendication 1, **caractérisée en ce qu'**au moins une tige d'entraînement commune est conçue comme crémaillère (26) et au moins une roue motrice affectée à la déviation de faisceau (19) du trombone à faisceau (20) ainsi qu'au moins une roue motrice affectée à la tête d'usinage laser (7) sont conçues comme pignons d'entraînement (24, 25) s'engrenant avec la crémaillère (26).

3. Machine-outil selon l'une quelconque des revendications précédentes, **caractérisée en ce que** sur le châssis (2) de la machine-outil est prévu en plus d'au moins une tige d'entraînement commune au moins un rail de guidage commun (27) pour la déviation de faisceau (19) du trombone à faisceau (20) et pour la tête d'usinage laser (7), qui s'étend en direction de l'axe de déplacement commun (axe x) de la déviation de faisceau (19) du trombone à faisceau (20) et de la tête d'usinage laser (7) et lequel guide la déviation de faisceau (19) du trombone à faisceau (20) et la tête d'usinage laser (7) dans cette direction.

4. Machine-outil selon l'une quelconque des revendications précédentes, **caractérisée en ce que** la déviation de faisceau (19) du trombone à faisceau (20) et une seconde structure de guidage (6) du châssis (2) de la machine-outil recueillant la tête d'usinage laser (7) et la guidant en direction d'un second axe de déplacement (axe y) peuvent être déplacées en direction de l'axe de déplacement commun (axe x) sur une première structure de guidage (3, 4), la seconde structure de guidage (6) pouvant être déplacée au moyen d'un entraînement (8, 9) avec au moins une roue motrice reliée par mouvement à la seconde structure de guidage (6) en direction de l'axe de déplacement commun (axe x), au moins une roue motrice affectée à la déviation de faisceau (19) du trombone à faisceau (20) et au moins une roue motrice affectée à la seconde structure de guidage (6) agissant avec la crémaillère commune (26), reliée à la première structure de guidage (3).
